# EUROPEAN PATENT APPLICATION

(11) **EP 4 475 260 A1**
(43) Date of publication of application: **11.12.2024**
(21) Application number: 23873154.1
(22) Date of filing: 26.09.2023
(51) Int. Cl.: H01M 10/0569, H01M 10/0568, H01M 4/525, H01M 4/505, H01M 4/38, H01M 10/052, H01M 10/0567

(54) **LITHIUM SECONDARY BATTERY**

(30) Priority: 29.09.2022 KR 20220124727
(71) Applicant: LG Energy Solution, Ltd., Seoul 07335 (KR)
(72) Inventor: CHO, Yoon Gyo, Daejeon 34122 (KR); LEE, Jung Min, Daejeon 34122 (KR); LEE, Chul Haeng, Daejeon 34122 (KR)
(74) Representative: Hoffmann Eitle
(86) International application number: PCT/KR2023/014913
(87) International publication number: WO 2024/072043

(57) **Abstract**

The present invention relates to a lithium secondary battery comprising: a positive electrode comprising a lithium nickel cobalt manganese-based oxide as a positive electrode active material; a negative electrode comprising a negative electrode active material composed of Si; and a non-aqueous electrolyte comprising a lithium salt, an organic solvent and an additive,wherein the organic solvent comprises a compound of Formula 1 and fluoroethylene carbonate, and the compound of Formula 1 is comprised in greater than 15 wt% on the basis of the total of the non-aqueous electrolyte.

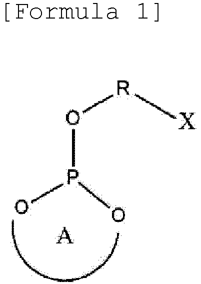

In Formula 1, A is a cyclic phosphite of 2 or 3 carbon atoms,R is an alkylene group of 1 to 5 carbon atoms, andX is a perfluoroalkyl group of 1 to 5 carbon atoms.

## Description

### TECHNICAL FIELD

### Cross-reference to Related Applications

This application claims the benefit of Korean Patent Application No. 10-2022-0124727, filed on September 29, 2022, in the Korean Intellectual Property Office, the contents of which are incorporated herein by reference.

### Technical Field

The present invention relates to a lithium secondary battery.

### BACKGROUND ART

Recently, according to the rapid expansion of the application area of secondary batteries to the power storage supply of a large-sized device such as vehicles and power storage systems as well as the power supply of electrical, electronic, telecommunication and computer electronic devices, requirement on secondary batteries having high capacity, high output and high stability is increasing.

Particularly, in the lithium secondary batteries for vehicles, high capacity, high output and long lifecharacteristics have become increasinglyimportant. In order to achieve the high capacity of secondary batteries, a nickelrich positive electrode active material or a silicon-based negative electrode active material, having high energy density but low stability, may be used.

If a secondary battery having the conditions is operated, due to the deterioration of a coated film formed on the surfaces of positive/negative electrodes or the surface structure of an electrode by side reactions occurring by the deterioration of an electrolyte according to the progress of charge and discharge, transition metal ions may be eluted from the surface of the positive electrode. The eluted transition metal ions in this way may be electro-deposited on the negative electrode, and the passivation capacity of an SEI may be degraded to cause the defect of deteriorating the negative electrode.

The deterioration phenomenon of the secondary battery tends to be accelerated even further if the potential of the positive electrode increases, or batteries are exposed to a high temperature.

In addition, if a lithium secondary battery is continuously used for a long time or stood at a high temperature, a gas may be produced to increase the thickness of the battery to cause, so-called swelling phenomenon, and the amount of the gas produced is known to be dependent on the state of the SEI.

Accordingly, in order to solve the defects, research for developing a method for reducing the swelling phenomenon of a secondary battery by forming a stable SEI film on a negative electrode and for improving stability at a high temperature is being conducted.

### DISCLOSURE OF THE INVENTION

### TECHNICAL PROBLEM

According to the conduct of research from various angles to solve the tasks, the present invention provides a lithium secondary battery including an organic solvent for a non-aqueous electrolyte, which may form a stable SEI film by strong reduction decomposition at a negative electrode including a silicon-based negative electrode active material. The lithium secondary battery according to the present invention provides improved cycle properties at a high temperature and storage properties at a high temperature, and thus, improved overall performance.

### TECHNICAL SOLUTION

To accomplish the object, the present invention provides a lithium secondary battery comprising: a positive electrode comprising a lithium nickel cobalt manganese-based oxide as a positive electrode active material; a negative electrode comprising a negative electrode active material composed of Si; and a non-aqueous electrolyte comprising a lithium salt, an organic solvent and an additive, wherein the organic solvent comprises a compound of Formula 1 and fluoroethylene carbonate, and the compound of Formula 1 is comprised in greater than 15 wt% on the basis of the total of the non-aqueous electrolyte.

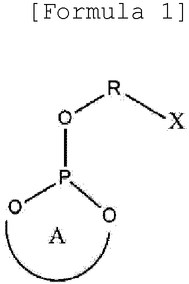

In Formula 1, A is a cyclic phosphite of 2 or 3 carbon atoms, R is an alkylene group of 1 to 5 carbon atoms, and X is a perfluoroalkyl group of 1 to 5 carbon atoms.

### ADVANTAGEOUS EFFECTS

The present invention pertains to a lithium secondary battery including a positive electrode and a negative electrode, having high energy density but inferior stability, wherein the compound represented by Formula 1 is included as a non-aqueous organic solvent. If the compound represented by Formula 1 is used, particularly, in a Si negative electrode, an SEI layer polymerized along with strong reduction decomposition, may be formed, and thus, the durability of the negative electrode may be improved even under the conditions of a high voltage and a high temperature.

Particularly, if the small content of the compound of Formula 1 is used at the level of an additive, a polymer may not be formed among the compound of Formula 1, and it is difficult to form a dense SEI layer. However, if the compound of Formula 1 is included in the high content at the level of an organic solvent as in the lithium secondary battery of the present invention, a dense and uniform SEI layer in which the ratio of monomers derived from the compound of Formula 1 is high, may be formed, and the durability of the negative electrode may be improved. The lithium secondary battery of the present invention in which the durability of the negative electrode is improved shows effects of not deteriorating overall performance even though being exposed to and operated at a high voltage and a high temperature for a long time.

### BEST MODE FOR CARRYING OUT THE INVENTION

It will be understood that words or terms used in the present disclosure and claims shall not be interpreted as the meaning defined in commonly used dictionaries. It will be further understood that the words or terms should be interpreted as having a meaning that is consistent with the technical idea of the invention, based on the principle that an inventor may properly define the meaning of the words or terms to best explain the invention.

It will be further understood that the terms "comprises", "provided" or "having," when used in this specification, specify the presence of stated features, numerals, steps, elements, or combinations thereof, but do not preclude the presence or addition of one or more other features, numerals, steps, elements or combinations thereof.

In addition, in the term "a to b carbon atoms" in the description, "a" and "b" mean the numbers of carbon atoms included in a particular functional group. That is, the functional group may include "a" to "b" carbon atoms. For example, "alkylene group of 1 to 5 carbon atoms" means an alkylene group including 1 to 5 carbon atoms, i.e., -CH₂-, - CH₂CH₂-, -CH₂CH₂CH₂-, -CH₂(CH₃)CH-, -CH(CH₃)CH₂-, -CH(CH₃)CH₂CH₂-, or the like.

In addition, in the description, the term "alkylene group" means a branched or unbranched divalent hydrocarbon group.

In addition, in the description, an alkyl group, an alkylene group or the like may all be substituted or unsubstituted.

In addition, in the description, an alkyl group or the like may be substituted or unsubstituted. The "substituted" means that at least one or more hydrogen bonded to carbon are substituted with elements other than hydrogen, unless otherwise separately defined, for example, substituted with an alkyl group of 1 to 20 carbon atoms, an alkenyl group of 2 to 20 carbon atoms, an alkynyl group of 2 to 20 carbon atoms, an alkoxy group of 1 to 20 carbon atoms, a cycloalkyl group of 3 to 12 carbon atoms, a cycloalkenyl group of 3 to 12 carbon atoms, a heterocycloalkyl group of 3 to 12 carbon atoms, a heterocycloalkenyl group of 3 to 12 carbon atoms, an aryloxy group of 6 to 12 carbon atoms, a halogen atom, a nitro group, an aryl group of 6 to 20 carbon atoms, a heteroaryl group of 2 to 20 carbon atoms, a haloaryl group of 6 to 20 carbon atoms or the like.

Hereinafter, the present invention will be explained in more detail.

The lithium secondary battery of the present invention includes a positive electrode including a positive electrode active material, a negative electrode including a negative electrode active material, a separator disposed between the positive electrode and a negative electrode, and a non-aqueous electrolyte. In this case, the lithium secondary battery of the present invention may be manufactured according to a common method well-known in this technical art. For example, a positive electrode, a negative electrode and a separator between the positive electrode and the negative electrode, may be stacked in order to form an electrode assembly, the electrode assembly may be inserted into a battery case, and a non-aqueous electrolyte may be injected.

Particularly, the lithium secondary battery of the present invention may include: a positive electrode including a lithium nickel cobalt manganese oxide as a positive electrode active material; a negative electrode including a silicon-based active material as a negative electrode active material; and a non-aqueous electrolyte including a lithium salt, an organic solvent and an additive.

The non-aqueous electrolyte included in the lithium secondary battery of the present invention may include a compound of Formula 1 as an organic solvent.

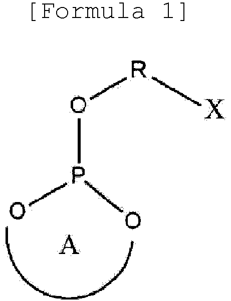

In Formula 1, A is a cyclic phosphite of 2 to 3 carbon atoms, and A is preferably a cyclic phosphite of 2 carbon atoms in view of a smooth ring-opening reaction for forming an SEI layer.

In Formula 1, R is an alkylene group of 1 to 5 carbon atoms, preferably, an alkylene group of 1 to 3 carbon atoms.

In Formula 1, X is a perfluoroalkyl group of 1 to 5 carbon atoms, and preferably, X is CF₃ or CF₂CF₃.

Particularly, the compound of Formula 1 may be a compound of Formula 1-1.

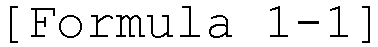

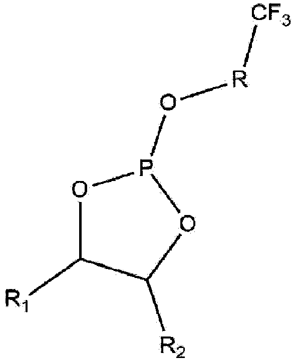

In Formula 1-1, R is an alkylene group of 1 to 5 carbon atoms, preferably, an alkylene group of 1 to 3 carbon atoms.

In Formula 1-1, R₁ and R₂ may be each independently H or an alkyl group of 1 to 3 carbon atoms.

More particularly, the compound of Formula 1 may be a compound of Formula 1-2.

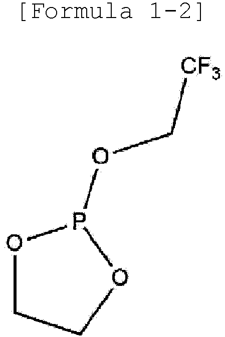

The lithium secondary battery of the present invention may include the compound of Formula 1 in greater than 15 wt%, preferably, 20 wt% to 50 wt%, more preferably, 30 wt% to 50 wt% on the basis of the total of the non-aqueous electrolyte. If the content of the compound of Formula 1 satisfies the above-described range, a dense and uniform SEI layer in which the ratio of the monomers derived from the compound of Formula 1 is high, may be formed, and the durability of the negative electrode may be improved. The lithium secondary battery of the present invention having improved durability of the negative electrode may show effects of not deteriorating overall performance even though being exposed to and operated at a high voltage and a high temperature for a long time.

The lithium secondary battery of the present invention includes the compound represented by Formula 1 and fluoroethylene carbonate (FEC) in the non-aqueous electrolyte. The lithium secondary battery of the present invention includes the compound of Formula 1 together with the fluoroethylene carbonate as the organic solvents, and a fluorine-based strong polymeric coated film may be formed, and a coated film having strong durability may be formed on the negative electrode. In addition, the coated film derived from phosphite has excellent lithium ion transmissibility properties and has effects of low resistance. In the lithium secondary battery of the present invention, the organic solvent included in the non-aqueous electrolyte is most preferably composed of the compound of Formula 1 and fluoroethylene carbonate.

The lithium secondary battery of the present invention may include the fluoroethylene carbonate (FEC) in 5 to 80 wt%, preferably, 10 to 70 wt%, more preferably, 20 to 50 wt% on the basis of the total of the non-aqueous electrolyte. If the FEC content satisfies the above-described range, a coated film having strong durability may be formed on the negative electrode.

The non-aqueous electrolyte of the present inventionmay further include at least one or more organic solvents selected from the group consisting of a cyclic carbonate-based organic solvent, a linear carbonate-based organic solvent, a linear ester-based organic solvent and a cyclic ester-based organic solvent.

Preferably, the non-aqueous electrolyte of the present invention may further include a linear carbonate-based organic solvent in addition to the compound represented by Formula 1 as the organic solvent. The linear carbonate-based organic solvent is an organic solvent having a low viscosity and a low permittivity, and may typically use at least one or more organic solvents selected from the group consisting of dimethyl carbonate (DMC), diethyl carbonate (DEC), dipropyl carbonate, ethyl methyl carbonate (EMC), methyl propyl carbonate and ethyl propyl carbonate, particularly, diethyl carbonate (DEC).

The cyclic carbonate-based organic solvent is an organic solvent having a high viscosity and is an organic solvent having high permittivity and dissociating a lithium salt well in an electrolyte, and may particularly include at least one or more selected from the group consisting of ethylene carbonate (EC), propylene carbonate (PC), fluoroethylene carbonate (FEC), 1,2-butylene carbonate, 2,3-butylene carbonate, 1,2-pentylene carbonate, 2,3-pentylene carbonate and vinylene carbonate.

In addition, the organic solvent may additionally include at least one or more ester-based organic solvents selected from the group consisting of linear ester-based organic solvents and cyclic ester-based organic solvents for preparing an electrolyte having high ionic conductivity.

The linear ester-based organic solvent may particularly include at least one or more organic solvents selected from the group consisting of methyl acetate, ethyl acetate, propyl acetate, methyl propionate, ethyl propionate, propyl propionate and butyl propionate.

In addition, the cyclic ester-based organic solvent may include at least one or more organic solvents selected from the group consisting of γ-butyrolactone, γ-valerolactone, γ-caprolactone, σ-valerolactone and ε-caprolactone.

Meanwhile, the organic solvent may additionally use organic solvents commonly used in a non-aqueous electrolyte as necessary, without limitation. For example, at least one or more organic solvents among ether-based organic solvents, glyme-based solvents and nitrile-based organic solvents may be additionally included.

The ether-based solvent may use any one selected from the group consisting of dimethyl ether, diethyl ether, dipropyl ether, methyl ethyl ether, methyl propyl ether, ethyl propyl ether, 1,3-dioxolane (DOL) and 2,2-bis(trifluoromethyl)-1,3-dioxolane (TFDOL), or a mixture of two or more thereof, without limitation.

The glyme-based solvent has higher permittivity and lower surface tension in contrast to the linear carbonate-based organic solvent, and little reactivity with a metal, and may include at least one or more selected from the group consisting of dimetoxyethane (glyme, DME), diethoxyethane, diglyme, triglyme and tetraglyme (TEGDME), without limitation.

The nitrile-based solvent may be one or more selected from the group consisting of acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile, without limitation.

The lithium salt included in the non-aqueous electrolyte of the present invention is used as an electrolyte salt in a lithium secondary battery and is used as a medium for transmitting ions. Generally, the lithium salt includes Li⁺ as a cation and as an anion, at least one selected from the group consisting of F-, Cl⁻, Br-, I-, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂⁻, AsF₆⁻, SbF₆⁻, CH₃SO₃⁻, (CF₃CF₂SO₂)₂N⁻, (CF₃SO₂)₂N⁻, (FSO₂)₂N⁻, BF₂C₂O₄⁻, BC₄O₈⁻, PF₄C₂O₄⁻, PF₂C₄O₈⁻, (CF₃)₂PF₄⁻, (CF₃)₃PF₃⁻, (CF₃)₄PF₂⁻, (CF₃)₅PF⁻, (CF₃)₆P⁻, C₄F₉SO₃⁻, CF₃CF₂SO₃⁻, CF₃CF₂(CF₃)₂CO⁻, (CF₃SO₂)₂CH⁻, CF₃(CF₂)₇SO₃⁻ and SCN⁻, may be included.

Particularly, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, lithium bis(fluorosulfonyl) imide (LiFSI), LiN(SO₂F)₂), lithium bis (perfluoroethanesulfonyl) imide (LiBETI, LiN(SO₂CF₂CF₃)₂) and lithium bis(trifluoromethanesulfonyl) imide (LiTFSI, LiN(SO₂CF₃)₂), or a mixture of two or more thereof. Besides, lithium salts commonly used in the electrolyte of a lithium secondary battery may be used, without limitation.

The concentration of the lithium salt may be suitably changed within a range commonly used, but may be included in a concentration of 0.1 M to 5.0 M, preferably, a concentration of 0.5 M to 3.0 M, more preferably, a concentration of 1.0 M to 2.0 M in an electrolyte to obtain the optimum forming effects of a coated film for preventing the corrosion of an electrode surface. If the concentration of the lithium salt satisfies the above-described range, the improving effects of the cycle characteristics when storing at a high temperature of a lithium secondary battery may be sufficient, and the viscosity of the non-aqueous electrolyte may be appropriate, and thus, the immersion properties of the electrolyte may be improved.

In addition, the non-aqueous electrolyte of the present invention may additionally include a known electrolyte additive in the non-aqueous electrolyte as necessary, in order to prevent the induction of the collapse of the negative electrode through the decomposition of the non-aqueous electrolyte in high-output environment, or to further improve high-rate discharge properties at a low temperature, stability at a high temperature, the prevention of overcharge, the suppressing effects of battery expansion at a high temperature or the like.

The other electrolyte additive may include at least one or more additives for forming an SEI layer, selected from the group consisting of cyclic carbonate-based compounds, sultone-based compounds, sulfate-based compounds, phosphate-based compounds, borate-based compounds, nitrile-based compounds, benzene-based compounds, amine-based compounds, silane-based compounds and lithium salt-based compounds.

The cyclic carbonate-based compound may include vinylene carbonate (VC) or vinyl ethylene carbonate.

The sultone-based compound may be at least one or more selected from the group consisting of 1,3-propane sultone (PS), 1,4-butane sultone, ethene sultone, 1,3-propene sultone (PRS), 1,4-butene sultone and 1-methyl-1,3-propene sultone.

The sulfate-based compound may include ethylene sulfate (Esa), trimethylene sulfate (TMS), or methyl trimethylene sulfate (MTMS).

The phosphate-based compound may include one or more compounds selected from the group consisting of lithium difluoro(bisoxalato)phosphate, lithium difluorophosphate, tris(trimethyl silyl)phosphate, tris(trimethyl silyl)phospite, tris(2,2,2-trifluoroethyl)phosphate and tris(2,2,2-trifluoroethyl)phosphite.

The borate-based compound may include tetraphenylborate, lithium oxalyldifluoroborate (LiODFB), and lithium bisoxalatoborate (LiB(6₂6₄)₂, LiBOB).

The nitrile-based compound may include at least one or more compounds selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenyl acetonitrile and 4-fluorophenyl acetonitrile.

The benzene-based compound may include fluorobenzene, the amine-based compound may include triethanolamine or ethylene diamine, and the silane-based compound may include tetravinylsilane.

The lithium salt-based compound is a compound different from the lithium salt included in the non-aqueous electrolyte, and may include lithium difluorophosphate (LiDFP), LiPO₂F₂ or LiBF₄.

Among the additional electrolyte additives, if the combination of vinylene carbonate (VC), 1,3-propane sultone and 1,3-propene sultone (PRS) is additionally included, a sturdier SEI coated film may be formed on the surface of the negative electrode at the initial activation process of a secondary battery, the production of a gas due to the decomposition of an electrolyte at a high temperature may be suppressed, and the stability of the secondary battery at a high temperature may be improved.

Meanwhile, the additional electrolyte additives may be used by mixing two or more types in 0.1 to 10 wt%, particularly, 0.2 to 8 wt%, preferably, 0.5 to 8 wt% on the basis of the total weight of the non-aqueous electrolyte. If the content of the additional electrolyte additives satisfies the above-described range, the improving effects of ion conductivity and cycle characteristics may be better.

The positive electrode included in the lithium secondary battery of the present invention may be manufactured by applying a positive electrode mixture slurry including a positive electrode active material, a binder, a conductive agent and a solvent on a positive electrode current collector.

The positive electrode current collector is not specifically limited as long as it does not induce the chemical change of the battery and has conductivity, for example, stainless steel, aluminum, nickel, titanium, baked carbon, or aluminum or stainless steel, surface treated with carbon, nickel, titanium, silver or the like, may be used.

The positive electrode included in the lithium secondary battery of the present invention may include a lithium nickel cobalt manganese-based oxide having the high nickel content as the positive electrode active material to increase energy density. Particularly, the lithium nickel cobalt manganese-based oxide may have a composition represented by Formula 2.

[Formula 2] LiₐNi_{b}Co_{c}M¹_{d}M²ₑO₂

In Formula 2, M¹ may be Mn, or a combination of Mn and Al, preferably, the combination of Mn and Al in view of reinforcing structural stability.

M² may be one or more selected from the group consisting of Zr, W, Y, Ba, Ca, Ti, Mg, Ta and Nb.

The a represents the atomic fraction of lithium in the lithium nickel cobalt manganese-based oxide, and may satisfy 0.90≤a≤1.1, preferably, 0.95≤a≤1.08, more preferably, 1.0≤a ≤1.08.

The b represents the atomic fraction of nickel among the metal elements excluding lithium in the lithium nickel cobalt manganese-based oxide, and may satisfy 0.80≤b<1.0, preferably, 0.80≤b≤0.95, more preferably, 0.80≤b≤0.90. If the nickel content satisfies the above range, high capacity may be accomplished.

The c represents the atomic fraction of cobalt among the metal elements excluding lithium in the lithium nickel cobalt manganese-based oxide, and may satisfy 0<c<0.2, 0<c≤ 0.15, or 0.01≤c≤0.10.

The d represents the atomic fraction of M¹ among the metal elements excluding lithium in the lithium nickel cobalt manganese-based oxide, and may satisfy 0<d<0.2, 0<d≤0.15, or 0.01≤d≤0.10.

The e represents the atomic fraction of M² among the metal elements excluding lithium in the lithium nickel cobalt manganese-based oxide, and may satisfy 0≤e≤0.1, or 0≤e≤0.05.

The positive electrode active material may be included in 60 to 99 wt%, preferably, 70 to 99 wt%, more preferably, 80 to 98 wt% on the basis of the total weight of the solid content excluding the solvent in the positive electrode mixture slurry.

The binder is a component assisting the bonding of the active material, the conductive agent or the like, and the bonding to the current collector.

The binder may include, for example, polyfluorovinylidene, polyvinyl alcohol, carboxymethyl cellulose (CMC), starch, hydroxypropyl cellulose, regenerated cellulose, polyvinyl pyrrolidone, polytetrafluoroethylene, polyethylene (PE), polypropylene, an ethylene-propylene-diene monomer, a sulfonated ethylene-propylene-diene monomer, a styrene-butadiene rubber, a fluorine rubber, various copolymers or the like.

Generally, the binder may be included in 1 to 20 wt%, preferably, 1 to 15 wt%, more preferably, 1 to 10 wt% on the basis of the total weight of the solid content excluding the solvent of the positive electrode mixture slurry.

The conductive agent is a component for further improving the conductivity of the positive electrode active material, and may be added in 1 to 20 wt% on the basis of the total weight of the solid content in the positive electrode mixture slurry. The conductive agent is not specifically limited as long as it does not induce the chemical change of a battery and has conductivity, and may include: for example, carbon powder such as carbon black, acetylene black, Ketjen black, channel black, furnace black, lamp black and thermal black; graphite powder such as natural graphite, artificial graphite and graphite, having a very developed crystal structure; conductive fibers such as carbon fibers and metal fibers;fluorocarbon powder;conductive powder such as aluminum powder and nickel powder; conductive whiskers such as zinc oxide whiskers and potassium titanate whiskers; conductive metal oxides such as titanium oxide; and conductive materials such as polyphenylene derivatives.

Generally, the conductive agent may be included in 1 to 20 wt%, preferably, 1 to 15 wt%, more preferably, 1 to 10 wt% on the basis of the total weight of the solid content excluding the solvent in the positive electrode mixture slurry.

The solvent may include an organic solvent such as N-methyl-2-pyrrolidone (NMP) or the like, and may be used in an amount to provide a preferably viscosity together with the positive electrode active material, and selectively a binder and a conductive agent. For example, the solvent may be included so that the concentration of the solid content including the positive electrode active material, and selectively a binder and a conductive agent may be 50 to 95 wt%, preferably, 70 to 95 wt%, more preferably, 70 to 90 wt%.

The negative electrode included in the lithium secondary battery of the present invention may be manufactured by applying a negative electrode mixture slurry including a negative electrode active material, a binder, a conductive agent and a solvent on the negative electrode current collector.

The negative electrode current collector is not specifically limited as long as it does not induce the chemical change of the battery and has conductivity, for example, copper, stainless steel, aluminum, nickel, titanium, baked carbon, copper or stainless steel, surface treated with carbon, nickel, titanium, silver or the like, an aluminum-cadmium alloy or the like, may be used. In addition, like the positive electrode current collector, minute embossing may be formed on the surface thereof to reinforce the bonding force of the negative electrode active material, and various types such as a film, a sheet, a foil, a net, a porous body, a foamed body, and a non-woven fabric may be used.

The negative electrode included in the lithium secondary battery of the present invention may include a silicon-based active material as the negative electrode active material to increase energy density. The silicon-based active material may include Si, SiOₓ (0<x<2) or the like. The negative electrode active material of the present invention may not include the conventional negative electrode active material such as graphite but may be composed of silicon (Si) or the like.

The negative electrode active material may be included in 60 to 99 wt%, preferably, 70 to 99 wt%, more preferably, 80 to 98 wt% on the basis of the total weight of the solid content excluding the solvent in the negative electrode mixture slurry.

The binder is a component assisting the bonding among the conductive agent, the active material and the current collector. The binder may include, for example, polyvinylidene fluoride (PVDF), polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, an ethylene-propylene-diene monomer, a sulfonated ethylene-propylene-diene monomer, a styrene-butadiene rubber, a fluorine rubber, various copolymers or the like.

Generally, the binder may be included in 1 to 20 wt%, preferably, 1 to 15 wt%, more preferably, 1 to 10 wt% on the basis of the total weight of the solid content excluding the solvent in the negative electrode mixture slurry.

The conductive agent is a component for further improving the conductivity of the negative electrode active material and may be included in 1 to 20 wt% on the basis of the total weight of the solid content of the negative electrode mixture slurry. The conductive agent is not specifically limited as long as it does not induce the chemical change of a battery and has conductivity, and may include: for example, carbon powder such as carbon black, acetylene black, Ketjen black, channel black, furnace black, lamp black and thermal black; graphite powder such as natural graphite, artificial graphite and graphite, having a very developed crystal structure; conductive fibers such as carbon fibers and metal fibers; fluorocarbon powder; conductive powder such as aluminum powder and nickel powder; conductive whiskers such as zinc oxide whiskers and potassium titanate whiskers; conductive metal oxides such as titanium oxide; and conductive materials such as polyphenylene derivatives.

The conductive agent may be included in 1 to 20 wt%, preferably, 1 to 15 wt%, more preferably, 1 to 10 wt% on the basis of the total weight of the solid content excluding the solvent in the negative electrode mixture slurry.

The solvent may include water or an organic solvent such as N-methyl-2-pyrrolidone (NMP), and may be used in an amount to provide a preferable viscosity together with the negative electrode active material, and selectively a binder and a conductive agent. For example, the solvent may be included so that the concentration of the solid content including the negative electrode active material, and selectively a binder and a conductive agent may be 50 wt% to 95 wt%, preferably, 70 wt% to 90 wt%.

As the separator included in the lithium secondary battery of the present invention, a porous polymer film which has been used as a common separator may be used, for example, a porous polymer film formed from a polyolefin-based polymer such as an ethylene homopolymer, a propylene homopolymer, an ethylene/butene copolymer, an ethylene/hexene copolymer and an ethylene/mathacrylate copolymer, alone or as a stacked structure of thereof, may be used. Otherwise, a commonly used porous non-woven fabric, for example, a glass fiber having a high melting point, a non-woven fabric of a polyethylene terephthalate fiber, or the like, may be used, without limitation. In addition, in order to secure heat resistance and mechanical strength, a coated separator including a ceramic component or a polymer material may be used,optionally, in a single layer or a multilayer structure.

The appearance of the lithium secondary battery of the present invention is not specifically limited, but may be a cylinder-type using a can, a prismatic-type, a pouch-type or a coin-type.

Hereinafter, the present invention will be explained more particularly referring to particular embodiments. However, the embodiments are only illustrations to assist the understanding of the present invention, but do not limit the scope of the present invention. It would be obvious to a person skilled in the art that various changes and modifications are possible within the scope and technical spirit of the present description, and the changes and modifications are included in the claims attached herein.

### Examples

### Example 1

### (Preparation of non-aqueous electrolyte)

A compound of Formula 1-2 and fluoroethylene carbonate (FEC) were mixed in a volume ratio of 20:80 to prepare a non-aqueous solvent. 1.5M of LiPF₆, 0.5 wt% of vinylene carbonate (VC), 0.5 wt% of 1,3-propane sultone (PS), 0.5 wt% of 1,3-propene sultone (PRS) were dissolved therein to prepare a non-aqueous electrolyte. In the non-aqueous electrolyte thus prepared, the compound of Formula 1-2 was included in 16 wt% on the basis of the total non-aqueous electrolyte, and FEC was included in 71 wt% on the basis of the total non-aqueous electrolyte.

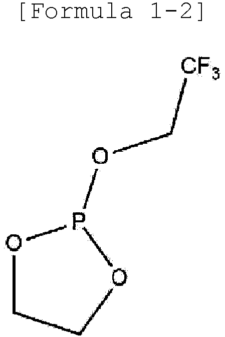

### (Manufacture of lithium secondary battery)

A positive electrode active material (LiNi_{0.86}Co_{0.05}Mn_{0.07}Al_{0.02}O₂): a conductive agent (carbon black) : a binder (polyvinylidene fluoride) in a weight ratio of 97.5:1.0:1.5 were added to a N-methyl-2-pyrrolidone (NMP) solvent to prepare a positive electrode slurry (the solid content of 50 wt%). The positive electrode slurry was applied on one side of a positive electrode current collector (Al thin film) having a thickness of 12 µm, dried, and press rolled to manufacture a positive electrode.

A negative electrode active material (Si) : a conductive agent (carbon black) : a binder (SBR-CMC) in a weight ratio of 95:1.5:3.5 were added to a N-methyl-2-pyrrolidone (NMP) solvent to prepare a negative electrode slurry (the solid content of 60 wt%). The negative electrode slurry was applied on one side of a negative electrode current collector (Cu thin film) having a thickness of 6 µm, dried, and press rolled to manufacture a negative electrode.

In a drying room, a polyolefin-based porous separator on which Al₂O₃ inorganic particles were coated, was disposed between the positive electrode and the negative electrode thus formed, and the non-aqueous electrolyte prepared was injected to manufacture a secondary battery.

### Example 2

A secondary battery was manufactured by the same method as in Example 1 except for using a non-aqueous solvent prepared by mixing the compound of Formula 1-2 and fluoroethylene carbonate (FEC) in a volume ratio of 30:70. In the non-aqueous electrolyte thus prepared, the compound of Formula 1-2 was included in 25 wt% on the basis of the total non-aqueous electrolyte, and FEC was included in 62 wt% on the basis of the total non-aqueous electrolyte.

### Example 3

A secondary battery was manufactured by the same method as in Example 1 except for using a non-aqueous solvent prepared by mixing the compound of Formula 1-2 and fluoroethylene carbonate (FEC) in a volume ratio of 50:50. In the non-aqueous electrolyte thus prepared, the compound of Formula 1-2 was included in 42 wt% on the basis of the total non-aqueous electrolyte, and FEC was included in 45 wt% on the basis of the total non-aqueous electrolyte.

### Comparative Example 1

A secondary battery was manufactured by the same method as in Example 1 except for using a non-aqueous solvent prepared by mixing the compound of Formula 1-2 and fluoroethylene carbonate (FEC) in a volume ratio of 18:82. In the non-aqueous electrolyte thus prepared, the compound of Formula 1-2 was included in 15 wt% on the basis of the total non-aqueous electrolyte, and FEC was included in 72 wt% on the basis of the total non-aqueous electrolyte.

### Comparative Example 2

A secondary battery was manufactured by the same method as in Example 1 except for using graphite as the negative electrode active material.

### Comparative Example 3

A secondary battery was manufactured by the same method as in Example 1 except for using a non-aqueous solvent prepared by mixing the compound of Formula 1-2 and ethylene carbonate (EC) in a volume ratio of 20:80. In the non-aqueous electrolyte thus prepared, the compound of Formula 1-2 was included in 18 wt% on the basis of the total non-aqueous electrolyte, and EC was included in 66 wt% on the basis of the total non-aqueous electrolyte.

### Experimental Example 1-Evaluation of High Temperature Cycle Characteristics

With respect to the secondary batteries manufactured in Examples 1 to 3 and Comparative Examples 1 to 3, cycle characteristics were evaluated.

Particularly, 250 cycles of charge and discharge were performed with respect to each of the batteries manufactured in Examples 1 to 3 and Comparative Examples 1 to 3, when 1 cycle includes charge at 45°C with a constant current of 0.33 C up to 4.2 V and discharge with a constant current of 0.33 C to 3.0 V, and a capacity retention rate was measured in contrast to an initial capacity after 250 cycles. The results are shown in Table 1.

**[Table 1]**

| | Capacity retention rate (%) |
|---|---|
| Example 1 | 83.6 |
| Example 2 | 85.4 |
| Example 3 | 90.8 |
| Comparative Example 1 | 70.4 |
| Comparative Example 2 | 72.8 |
| Comparative Example 3 | 78.2 |

As shown in Table 1, the secondary batteries of Examples 1 to 3 showed higher capacity retention rates and better lifetime characteristics in contrast to Comparative Examples 1 to 3.

### Experimental Example 2-Evaluation of High Temperature Storage Properties

With respect to the secondary batteries manufactured in Examples 1 to 3 and Comparative Examples 1 to 3, storage properties at a high temperature were evaluated.

Particularly, each of the batteries manufactured in Examples 1 to 3 and Comparative Examples 1 to 3 was fully charged to 4.2 V, and then, stored at 60°C for 8 weeks.

Before the storage, the capacity of the fully charged secondary battery was measured and set as the initial capacity of the secondary battery.

After 8 weeks, with respect to the stored secondary battery, a capacity retention rate in contrast to the initial capacity before the storage was measured. The percentage of the capacity retention rate of the secondary battery in contrast to the initial capacity of the secondary battery was calculated, and the capacity retention rate after 8 weeks was derived. The results are shown in Table 2.

**[Table 2]**

| | Capacity retention rate (%) |
|---|---|
| Example 1 | 88.9 |
| Example 2 | 91.2 |
| Example 3 | 95.4 |
| Comparative Example 1 | 73.2 |
| Comparative Example 2 | 75.7 |
| Comparative Example 3 | 83.1 |

As shown in Table 2, the secondary batteries of Examples 1 to 3 showed higher capacity retention rates after 8 weeks and stable performance at a high temperature in contrast to the secondary batteries of Comparative Examples 1 to 3.

## Claims

1. A lithium secondary battery, comprising:
a positive electrode comprising a lithium nickel cobalt manganese-based oxide as a positive electrode active material;
a negative electrode comprising a negative electrode active material composed of Si; and
a non-aqueous electrolyte comprising a lithium salt, an organic solvent and an additive,
wherein the organic solvent comprises a compound of the following Formula 1 and fluoroethylene carbonate, and
the compound of Formula 1 is comprised in greater than 15 wt% on the basis of the total of the non-aqueous electrolyte: 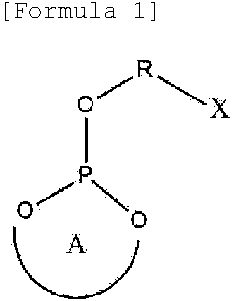
in Formula 1, A is a cyclic phosphite of 2 or 3 carbon atoms,
R is an alkylene group of 1 to 5 carbon atoms, and
X is a perfluoroalkyl group of 1 to 5 carbon atoms.

2. The lithium secondary battery according to claim 1, wherein the lithium nickel cobalt manganese-based oxide has a composition represented by the following Formula 2:
[Formula 2] LiₐNi_{b}Co_{c}M¹_{d}M²ₑO₂
(in Formula 2, M¹ is Mn or a combination of Mn and Al, M² is one or more selected from the group consisting of Zr, W, Y, Ba, Ca, Ti, Mg, Ta and Nb, 0.8≤a≤1.2, 0.80≤b<1, 0<c<0.2, 0<d<0.2, and 0≤e≤0.1).

3. The lithium secondary battery according to claim 1, wherein the organic solvent is composed of the compound of Formula 1 and fluoroethylene carbonate.

4. The lithium secondary battery according to claim 1, wherein the lithium salt comprises LiPF₆.

5. The lithium secondary battery according to claim 1, wherein R of Formula 1 is an alkylene group of 1 to 3 carbon atoms.

6. The lithium secondary battery according to claim 1, wherein X is CF₃ or CF₂CF₃.

7. The lithium secondary battery according to claim 1, wherein the compound of Formula 1 is a compound of the following Formula 1-1: 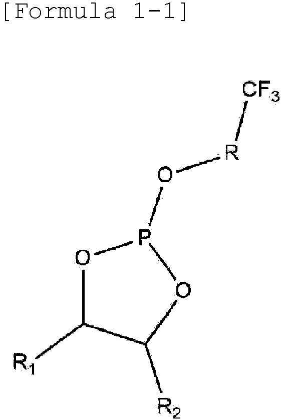
in Formula 1-1, R is an alkylene group of 1 to 5 carbona toms, and
R₁ and R₂ are each independently H or an alkyl group of 1 to 3 carbon atoms.

8. The lithium secondary battery according to claim 1, wherein the compound of Formula 1 is a compound of the following Formula 1-2:

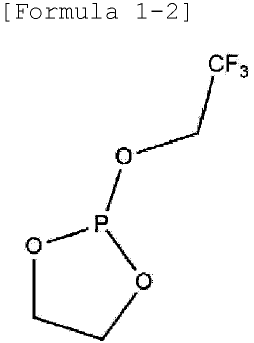

9. The lithium secondary battery according to claim 1, wherein the compound of Formula 1 is comprised in 20 to 50 wt% on the basis of the total of the non-aqueous electrolyte.

10. The lithium secondary battery according to claim 1, wherein the fluoroethylene carbonate is comprised in 5 to 80 wt% on the basis of the total of the non-aqueous electrolyte.
